# EUROPEAN PATENT APPLICATION

(11) **EP 1 204 189 A2**
(43) Date of publication of application: **08.05.2002**
(21) Application number: 01402799.9
(22) Date of filing: 29.10.2001
(51) Int. Cl.: H02J 7/00

(54) **Device suitable for supplying power to a handheld apparatus**

(30) Priority: 02.11.2000 ES 200002630
(71) Applicant: ALCATEL, 75008 Paris (FR)
(72) Inventor: Quinones de la Guia, Carlos, 28760 Tres Cantos, Madrid (ES); Merin Celemin, Piedad Gemma, 28016 Madrid (ES); Vázquez Lopez, Manuel, 28760 Tres Cantos, Madrid (ES); Rouverand, Christopher, 92600 Asnières sur Seine (FR); Bertelli, Jean-Marc, 92250 La Garenne (FR)
(74) Representative: Sciaux, Edmond

(57) **Abstract**

Device (11) suitable for charging an electric energy storage means incorporated in a handheld apparatus, without it being necessary, for carrying out the charging operation, to electrically connect said device (11) suitable for charging to a source of electric power.

The device (11) obtains electric power from chemical energy stored in a substance rich in hydrogen atoms, so that during a chemical reaction, electric power, among other products, is released.

The electric power is fed to a converter means (23), which converts it into a voltage and current suitable for carrying out the charging of the electric energy storage means of the handheld device.

## Description

### OBJECT OF THE INVENTION

The present invention relates to a device adapted for supplying power to an electric energy storage medium, such as a battery, included in a handheld device, such as a portable telephone.

The aforementioned device, namely a fuel cell stack, obtains electric power from the chemical energy stored in a substance rich in hydrogen.

According to the foregoing, the handheld device is made independent of an electric power source such as an electric power distribution mains, because the battery of the handheld device is charged from the fuel cell stack, and not from the distribution mains existing in the premises where the handheld device is currently located.

The fuel cell stack supplies suitable electric power for the correct operation of the electric circuits and other components included in the handheld device. As a consequence, the portable equipment is made independent of the power distribution mains, enhancing its mobility and autonomy.

### STATE OF THE ART

Generally speaking, a handheld device, such as a mobile telephone, incorporates an electric cell or battery that supplies electric power to the circuits of the aforementioned mobile telephone, for the mobile telephone to perform the normal functions that said telephone carries out.

The battery provides the mobile telephone with a number of hours of autonomy. As a consequence, the battery has to be recharged from an electric power source by means of a converter device, namely, a battery charger, in order that it may be used again.

The converter device transforms the electric power supplied from the electric power source, for example, an electric power distribution mains, into a voltage and current suitable for carrying out the battery charging operation.

Thus, when a user of the mobile telephone wishes to charge the battery, process that lasts various hours, the user must have a socket accessible which is connected to the distribution mains, in order to be capable to connect the battery charger to the aforementioned socket, by means of an appropriately sized plug for the dimensions of the socket.

Given that there are different types of electric power distribution mains, there are different types of standardised plugs adequate for use in the pertinent power distribution facility, and the mobile telephone comes with various types of plug, at least those types the use of which is most widespread.

Thus, there exists a need to develop a device capable of charging the battery contained in the handheld device, in such a manner that the battery charger need not be connected to the electric power mains. Thus, it is unnecessary to have a charger with different types of plug suitable for connecting the aforementioned charger to different power distribution mains, with the objective of achieving maximum autonomy and maximum mobility of the handheld device.

### CHARACTERISATION OF THE INVENTION

A purpose of the invention is to facilitate a device suitable for carrying out the charging of an electric power storage means incorporated in a handheld apparatus, without it being necessary, in order to carry out the charging operation, to electrically connect the aforementioned device suitable for charging to a source of electric power, such as an electric power distribution mains. As a consequence, the user of the aforementioned handheld apparatus need not have various types of plug available, since the charging of the energy storage means is independent of the source of energy existing at the current location of the user.

The device suitable for carrying out the charging of the battery obtains electric power from chemical energy stored in a substance rich in hydrogen atoms. As a consequence, in the device suitable for carrying out the charging operation a chemical reaction occurs between the substance rich in hydrogen and at least one other reagent, in such a manner that during said chemical reaction, electric power, among other products, is released.

The electric power is supplied to a converter means, which converts it into a voltage and current suitable for carrying out the'charging of the electric power storage means of the handheld device.

The charging process, that is, the chemical reaction is produced whilst the handheld device is connected to the device suitable for charging it, which is a fuel cell stack that is of reduced size, is light in weight and easily transported.

### BRIEF DESCRIPTION OF THE DRAWINGS

A fuller explanation of the invention is given in the following description, based on the attached figures, in which:
- figure 1 shows, in block diagram form, the electrical connection existing between the device supplier of electric power and a handheld apparatus according to the invention, and
- figure 2 shows, in block diagram form, an embodiment of the device supplier of electric power according to the invention.

### DESCRIPTION OF THE INVENTION

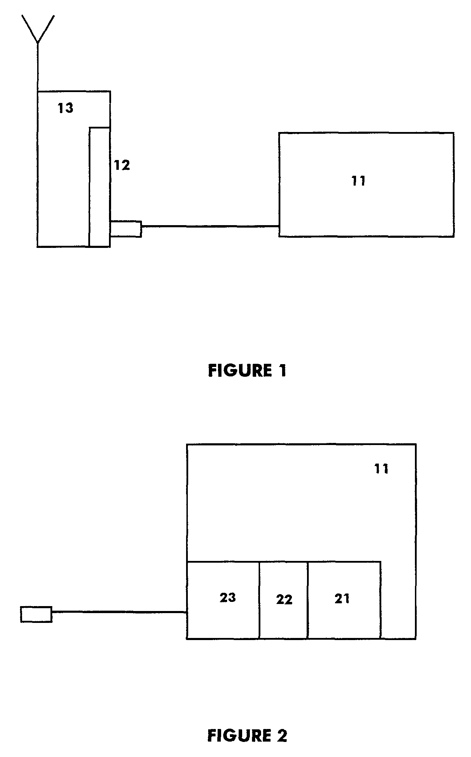

To facilitate the detailed description of an embodiment of the present invention reference shall be made to the attached drawings, in order to provide a better understanding of said description. Hence, with regard to figure 1, a device 11 can be seen that is capable of supplying electric power to a handheld apparatus 13 such as a portable telephone, with no need for the aforementioned device 11 to be connected to a source of electric power such as an electric power distribution mains, an electric power generator, or other similar thing.

In relation with figure 2, a structure of the present device 11 supplier of electric power may be observed, which includes a first storage means 21 that is capable of storing a substance rich in hydrogen, and also of supplying the aforementioned substance to a first interface 22 that is adapted in order that therein the substance rich in hydrogen reacts with at least one other reagent, in such a manner that in the chemical reaction that takes place, at least electric power is released which is supplied to a converter means 23.

The converter means 23 is capable of converting said electric power to a value of voltage and current suitable for electrically charging an energy storage means 12 included in the aforementioned handheld apparatus 13. The aforementioned converter means 23 is a step-up or boost converter, for example. On the other hand, the storage means 12 is a battery that provides the mobile telephone 13 with autonomy.

The first storage means 21 as well as storing the aforementioned substance rich in hydrogen, is capable of feeding the first interface 22, with the object that the chemical reaction which releases electric power take place. The first interface 22 admits at least another reagent that participates in the aforementioned chemical reaction.

The first storage means 21 has characteristics such that it permits its replacement with a second storage means, when the substance rich in hydrogen is exhausted in the fist storage means. In another embodiment, the aforementioned first storage means 21 includes a second interface, not shown, which is capable of allowing a quantity of substance rich in hydrogen to pass, with the object of refilling the aforementioned first storage means 21.

The device 11 capable of recharging a battery 12 of a portable telephone 13 is a fuel cell stack that is small in size, light in weight and easily transported.

## Claims

1. **Device suitable for supplying power to a handheld apparatus** (13) that includes an energy storage means (12), **characterised in that** said device (11) is adapted for supplying electric power to said energy storage means (12), without being connected to a source of electric power.

2. **Device suitable for supplying power** according to claim 1, **characterised in that** said device (11) includes a first interface (22) adapted for joining a first storage means (21) and a converter means (23).

3. **Device suitable for supplying power** according to claim 2, **characterised in that** said first interface (21) is adapted for controlling a chemical reaction in which one of the reagents is a substance rich in hydrogen, in such a manner that one of the products obtained in said chemical reaction is electric power, which is supplied to said converter means (23).

4. **Device suitable for supplying power** according to claim 2, **characterised in that** said converter means (23) is a step-up or boost converter, which is adapted for converting the electric power received from the first interface (22) into an electric power suitable for performing the charging of said energy storage means (12).

5. **Device suitable for supplying power** according to claim 3, **characterised in that** said first storage means (21) is adapted for storing said substance rich in hydrogen and, in addition, is adapted for feeding said substance rich in hydrogen to said first interface (22).

6. **Device suitable for supplying power** according to claim 5, **characterised in that** said first storage means (21) is adapted for being replaced with a second storage means, when said substance held in the first storage means (21) is exhausted.

7. **Device suitable for supplying power** according to claim 5, **characterised in that** said first storage means (21) is adapted for being refilled with said substance rich in hydrogen.

8. **Device suitable for supplying power** according to any of the previous claims, **characterised in that** said device (11) is a fuel cell stack.

9. **Device suitable for supplying power** according to any of the previous claims, **characterised in that** said handheld apparatus (13) is a mobile telephone.
